# EUROPEAN PATENT APPLICATION

(11) **EP 4 346 063 A2**
(43) Date of publication of application: **03.04.2024**
(21) Application number: 23200287.3
(22) Date of filing: 28.09.2023
(51) Int. Cl.: H02J 9/06, H02J 13/00

(54) **SOFTWARE CONFIGURABLE ACCESSORIES FOR AN AUTOMATIC TRANSFER SWITCH (ATS)**

(30) Priority: 29.09.2022 US 202217956424
(71) Applicant: Asco Power Technologies, L.P., Florham Park, NJ 07932 (US)
(72) Inventor: BONACHEA, Victor E., Elmwood Park, 07407 (US); HAYES, John E., Mount Bethel, 18343 (US); LEVISAY, Chauncey A., Union City, 07087 (US)
(74) Representative: Plasseraud IP

(57) **Abstract**

A method includes identifying an enablement request to control enablement of a first software configurable accessory (SCA) of available SCAs that are each configured to interact, when activated, with at least one corresponding hardware components of a plurality of hardware components associated with the ATS, wherein the first SCA is configured to interact, when activated, with a first hardware component. The method further includes enabling the first SCA responsive to identifying the enablement request, wherein SCAs of available SCAs that have been enabled are available to be activated, and displaying an interactive graphical element (IGE) that corresponds to the first SCA at an interface of the ATS when the first SCA is enabled, wherein the IGE is configured to facilitate interaction between a user and the first SCA for activating and/or providing input to the first SCA for interacting with the first hardware component.

## Description

### TECHNICAL FIELD

The present disclosure relates to input/output (I/O) accessory configuration for an automatic transfer switch (ATS), and more particularly, to techniques for software configurable I/O accessories for an ATS.

### BACKGROUND

An automatic transfer switch (ATS) is designed to provide a continuous source of power for critical loads by automatically transferring from a normal power source to an emergency power source when one or more predetermined events occur (e.g., the normal power source falls below a preset limit). Transfer switches operate, for example, to transfer a power consuming load from a circuit with a normal power supply to a circuit with an auxiliary power supply, e.g., upon detection of failure to obtain power from the normal power supply. In addition, the transfer switch can automatically reconnect the normal power supply to the load if the normal power supply is reestablished.

The ATS can be provided with various discrete input and output (I/O) accessories that can be standard or customized and can vary in complexity. For example, simple input accessories can each include a different switch mounted to a door of a control section of the ATS. Simple output accessories can each drive an indicator to provide feedback to a user. Each local I/O accessory can include a component mounted to the door of the ATS and/or can interface to a customer terminal block and/or an add-on panel.

Each I/O accessory adds to system cost. Each component of the I/O accessory (e.g., a switch, relay, indicator) is added to the ATS, increasing cost for materials and labor and increasing risk of failure due to faults in wiring and/or added circuitry. When additional circuitry is needed by an I/O accessory, installation is performed during the manufacturing process, slowing down delivery and extending lead time. Since each I/O accessory is physically unique, distributors need to have a variety of finished goods and add-on panels in stock, which comes with a risk of under- or over-stocking these items.

While conventional methods and systems have generally been considered satisfactory for their intended purpose, there is still a need in the art for a system and method to customize ATSs with reduced or minimal costs and reduced risks of failure and under- or over-stocking.

### SUMMARY

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings. To achieve these and other advantages and in accordance with the purpose of the illustrated embodiments, in one aspect, disclosed is a method for controlling enablement of a software configurable accessory of a plurality of available software configurable accessories that are usable with an automatic transfer switch (ATS). The method includes identifying an enablement request to control enablement of a first software configurable accessory of available software configurable accessories that are each configured to interact, when activated, with at least one corresponding hardware components of a plurality of hardware components associated with the ATS. The first software configurable accessory is configured to interact, when activated, with a first hardware component of the plurality of hardware components. The method further includes enabling the first software configurable accessory responsive to identify the enablement request, wherein software configurable accessories of the available software configurable accessories that have been enabled are available to be activated. The method further includes displaying an interactive graphical element (IGE) that corresponds to the first software configurable accessory at an interface of the ATS when the first software configurable accessory is enabled. The IGE is configured to facilitate interaction between a user and the first software configurable accessory for activating and/or providing input to the first software configurable accessory for interacting with the first hardware component.

In one or more embodiments, the method can further include identifying a second enablement request to control enablement of a second software configurable accessory of the available software configurable accessories. The second software configurable accessory can be configured to interact, when activated, with the first hardware component or a second hardware component of the plurality of hardware components. At least one of the first and second software configurable accessories, when enabled, can be configured to interact with a respective, corresponding assigned circuit selection of one or more assigned circuits that are integrated in the ATS. The method can further include enabling the second software configurable accessory responsive to identifying the second enablement request, wherein upon activation of either of the first and second software configurable accessories, the activated first or second software configurable accessory can interact with its corresponding assigned circuit that was selected, if any. The interaction between the activated first or second software configurable accessory and its corresponding assigned circuit can influence interaction between the activated first or second software and the corresponding first or second hardware component. At least one of the first and second software configurable accessories can correspond to different assigned circuit selections or one of the first and second software configurable accessories can correspond to an assigned circuit selections.

In one or more embodiments, the method can further include identifying a second enablement request to control enablement of a second software configurable accessory of the available software configurable accessories, wherein the second software configurable accessory can be configured to interact, when activated, with the first hardware component or a second hardware component of the plurality of hardware components, and enabling the second software configurable accessory responsive to identifying the second enablement request. Upon activation of either of the first and second software configurable accessories, the activated first or second software configurable accessory can interact with its corresponding hardware component of the first and second hardware components, and when the first and second software configurable accessories are configured to both operate with the first hardware component, the correspond to the first and second software configurable accessories, when enabled, can be configured to perform a different function when interacting with the first hardware component.

In one or more embodiments, when the first software configurable accessory is enabled, displaying the IGE includes receiving an activation request to activate the first software configurable accessory, and the method can further include activating the first software configurable accessory responsive to receiving the activation request. When interacting with the first hardware component, the first software configurable accessory can be configured to at least one of provide an input signal to the first hardware and receive output signals from the first hardware component, and displaying the IGE includes displaying output data based on the output signals.

In one or more embodiments, enabling the first software configurable accessory can be performed at a time of manufacture.

In one or more embodiments, enabling the first software configurable accessory can be performed at a field location after installation of the ATS at the field location.

In one or more embodiments, enabling the first software configurable accessory can include authenticating a source of the request.

In one or more embodiments, at least one of receiving the enablement request and displaying the IGE can use a digital user interface, and the digital user interface can be at least one of a remote digital user interface that is remote form the ATS, an integrated digital user interface that is integrated with the ATS, and a human machine interface (HMI) integrated with the ATS.

In one or more embodiments, identifying the enablement request can include receiving a proprietary signal.

In one or more embodiments, wherein the method can further include operating a fixed input or output device using at least one of a door control, a customer terminal block, and an add-on panel to access the fixed hardware component incorporated with the ATS.

In one or more embodiments, the method can further include, after identifying the request, verifying that the first software configurable accessory is standard or has been purchased and requires circuitry that is already installed in the ATS, wherein the enabling the at least one software configurable accessory can be contingent upon the verifying.

In one or more embodiments, before enabling the first software configurable accessory, the method can further include unlocking a lock, wherein when the lock is locked, the lock can prevent the first software configurable accessory from being enabled and/or accessed.

In accordance with a further aspect of the disclosure, s controller of an ATS is provided. The controller includes a memory configured to store instructions and a processor disposed in communication with the memory, wherein the processor, upon execution of the instructions is configured to identify an enablement request to control enablement of a first software configurable accessory of available software configurable accessories that are each configured to interact, when activated, with at least one corresponding hardware components of a plurality of hardware components associated with the ATS, wherein the first software configurable accessory is configured to interact, when activated, with a first hardware component of the plurality of hardware components. The processor, upon execution of the instructions is configured to enable the first software configurable accessory responsive to identifying the enablement request, wherein software configurable accessories of the available software configure accessories that have been enabled are available to be activated. The processor, upon execution of the instructions is configured to display an interactive graphical element (IGE) that corresponds to the first software configurable accessory at an interface of the ATS when the first software configurable accessory is enabled, wherein the IGE is configured to facilitate interaction between a user and the first software configurable accessory for activating and/or providing input to the first software configurable accessory for interacting with the first hardware component.

In one or more embodiments, the processor upon execution of the instructions can be further configured to identify a second enablement request to control enablement of a second software configurable accessory of the available software configurable accessories, wherein the second software configurable accessory can be configured to interact, when activated, with the first hardware component or a second hardware component of the plurality of hardware components, wherein at least one of the first and second software configurable accessories, when enabled, can be configured to interact with a respective, corresponding assigned circuit selection of one or more assigned circuits that are integrated in the ATS. The processor, upon execution of the instructions can be configured to enable the second software configurable accessory responsive to identifying the second enablement request, wherein upon activation of either of the first and second software configurable accessories, the activated first or second software configurable accessory can interact with its corresponding assigned circuit that was selected, if any, wherein the interaction between the activated first or second software configurable accessory and its corresponding assigned circuit can influence interaction between the activated first or second software and the corresponding first or second hardware component.

In still a further aspect of the disclosure, a method is provided for configuring an ATS. The method includes displaying a menu of software configurable accessories available for selection, wherein each of the software configurable accessories is configured to interact with a corresponding hardware components of a plurality of hardware components associated with the ATS. The method further includes receiving a menu selection of a software configurable accessory, wherein the selected software configurable accessory interacts with a first hardware component of the plurality of hardware components, and transmitting a proprietary signal to the ATS with the menu selection. A controller of the ATS enables the selected software configurable accessory for interacting with the first hardware component responsive to receiving the proprietary signal and a graphical user interface (GUI) device of the ATS displays an interactive graphical element (IGE) that corresponds to the selected software configurable accessory when the selected software configurable accessory is enabled, wherein the IGE is configured to interact with the first hardware component and a user for activating and/or providing input to the selected software configurable accessory.

In one or more embodiments, the selected software configurable accessory, when enabled, can be configured to interact with an assigned circuit selected from one or more assigned circuits that are integrated in the ATS. Upon activation of the selected software configurable accessories, the activated selected software configurable accessory can interact with its corresponding assigned circuit that was selected, wherein the interaction between the activated selected software configurable accessory and its corresponding assigned circuit can influence interaction between the activated first or second software and the corresponding first or second hardware component.

In one or more embodiments, transmission of the proprietary signal for enabling the selected software configurable accessory can be performed at a time of manufacture.

In one or more embodiments, transmission of the proprietary signal for enabling the selected software configurable accessory can be performed at a field location after installation of the ATS at the field location.

In one or more embodiments, the method can further include authenticating a user operating a proprietary device and the proprietary device via which the menu is displayed before accepting the menu selection or transmitting the proprietary signal.

In an additional aspect of the disclosure, a proprietary tool is provided for configuring an ATS. The proprietary tool includes a memory configured to store instructions and a processor disposed in communication with the memory. The processor upon execution of the instructions is configured to display a menu of software configurable accessories available for selection, wherein each of the software configurable accessories is configured to interact with a corresponding hardware components of a plurality of hardware components associated with the ATS. The processor upon execution of the instructions is further configured to receive a menu selection of a software configurable accessory, wherein the selected software configurable accessory interacts with a first hardware component of the plurality of hardware components. The processor upon execution of the instructions is further configured to transmit a proprietary signal to the ATS with the menu selection, wherein a controller of the ATS enables the selected software configurable accessory for interacting with the first hardware component responsive to receiving the proprietary signal and a graphical user interface (GUI) device of the ATS displays an interactive graphical element (IGE) that corresponds to the selected software configurable accessory when the selected software configurable accessory is enabled, wherein the IGE is configured to interact with the first hardware component and a user for activating and/or providing input to the selected software configurable accessory.

In accordance with still further aspects of the disclosure a non-transitory computer readable storage medium and one or more computer programs embedded therein is provided for one or more of the disclosed methods. When executed by a corresponding computer system of one or more computer systems, the one or more computer programs cause the corresponding computer system to perform the corresponding disclosed methods.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

A more detailed description of the disclosure, briefly summarized above, may be had by reference to various embodiments, some of which are illustrated in the appended drawings. While the appended drawings illustrate select embodiments of this disclosure, these drawings are not to be considered limiting of its scope, for the disclosure may admit to other equally effective embodiments.
FIG. 1 is a block diagram illustrating an example automatic transfer switch (ATS) having configurable input/output (I/O) accessories, in accordance with one or more embodiments of the disclosure;
FIG. 2A is a flowchart illustrating an example of a method for handling a request to control enablement of a software configurable accessory of the ATS for configuring the ATS, in accordance with one or more embodiments of the disclosure;
FIG. 2B is a flowchart illustrating an example method performed by an enabled software configurable accessory, in accordance with one or more embodiments of the disclosure;
FIG. 2C is a flowchart illustrating an example method for processing a determination whether to enable a software configurable accessory for which enablement has been requested, in accordance with one or more embodiments of the disclosure;
FIG. 2D is a flowchart illustrating an example method for submitting an enablement request using a proprietary device, in accordance with one or more embodiments of the disclosure;
FIG. 3 is a block diagram of an example computer system used by a controller of the ATS or controlling activation of software configurable accessories of the ATS, in accordance with embodiments of the invention.

Identical reference numerals have been used, where possible, to designate identical elements that are common to the figures. However, elements disclosed in one embodiment may be beneficially utilized on other embodiments without specific recitation.

### DETAILED DESCRIPTION

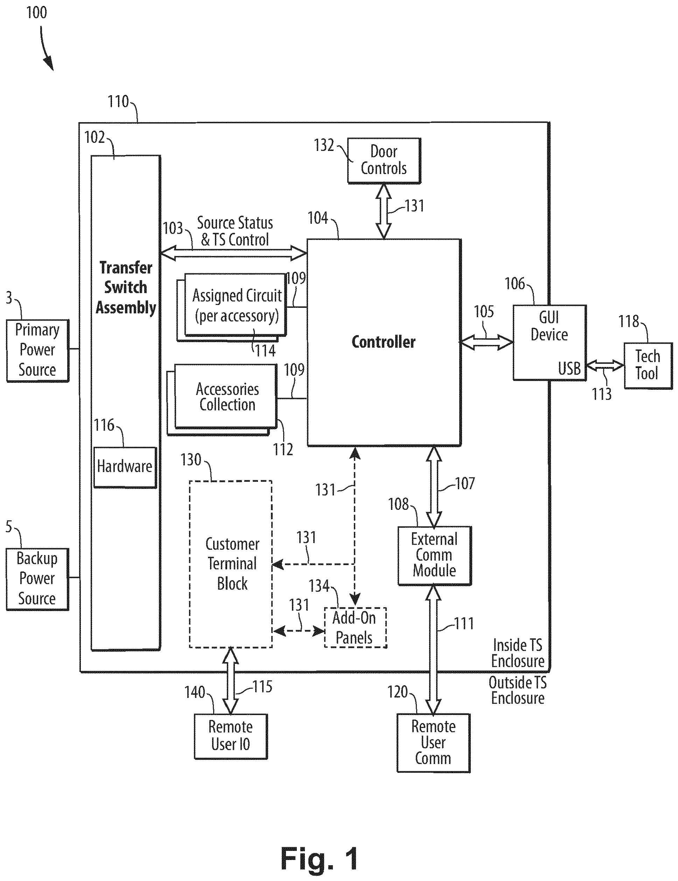

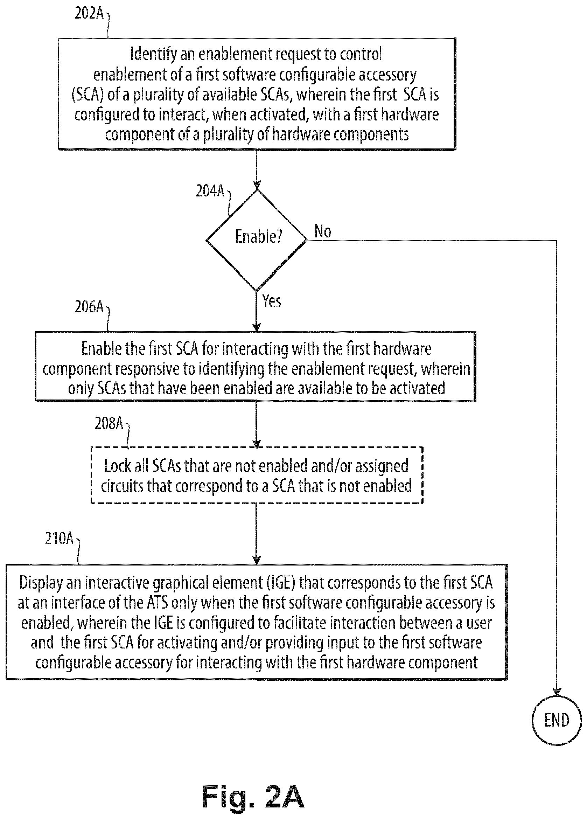

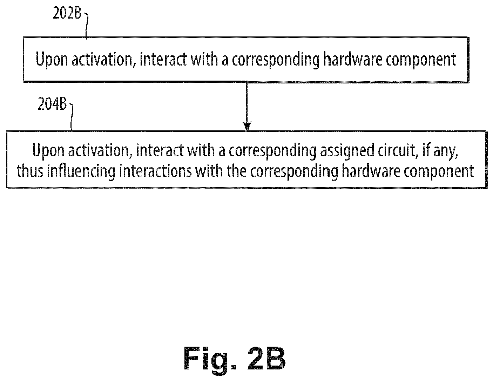

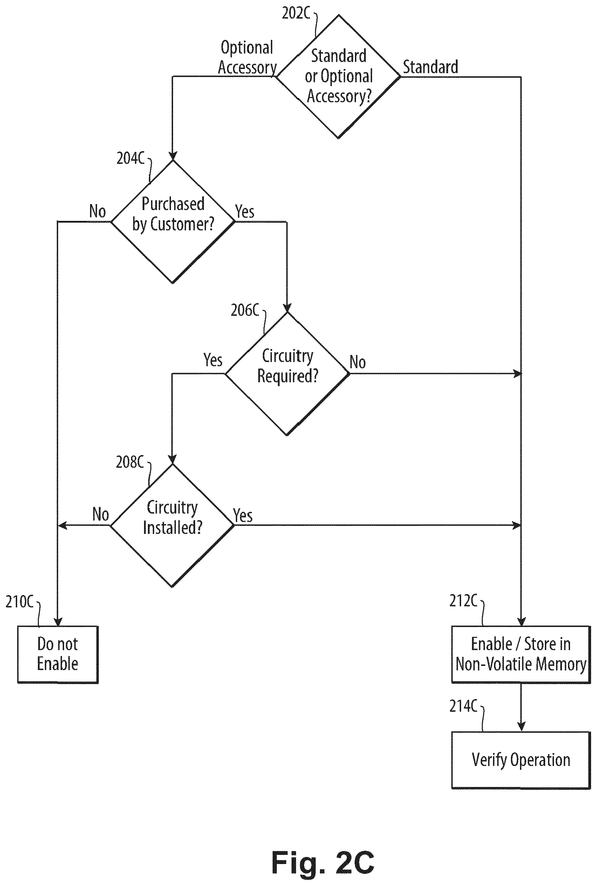

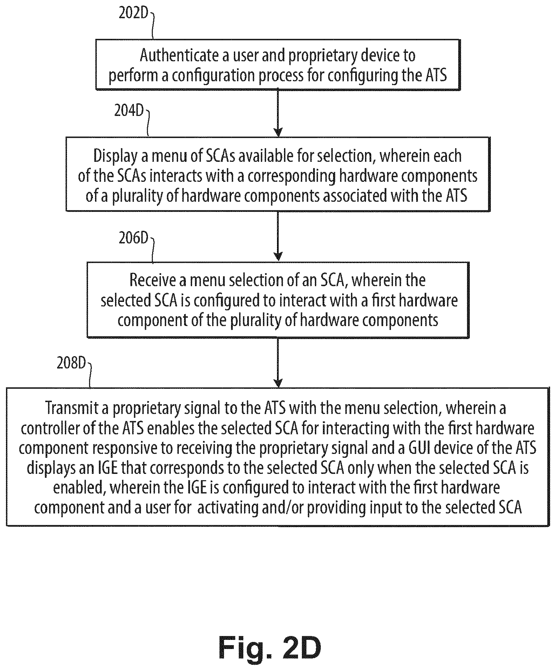

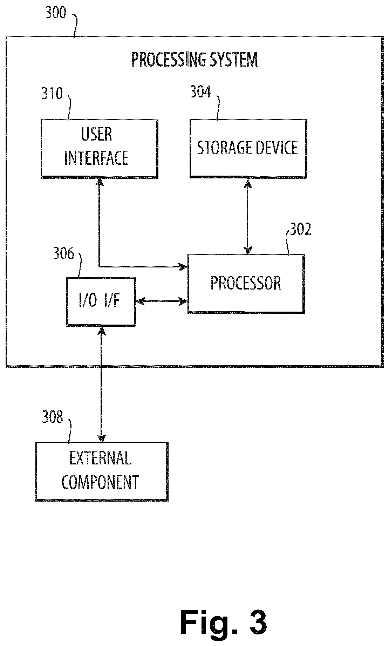

With reference now to the drawings, for purposes of explanation and illustration, and not limitation, a block diagram of an exemplary embodiment of a configurable automatic transfer switch (ATS) in accordance with the disclosure is shown in FIG. 1, wherein the configurable ATS is designated generally by reference character 100. Methods associated with controlling activation of a selected software configurable accessory for use with an automatic transfer switch (ATS) in accordance with the disclosure, or aspects thereof, are provided in FIGS. 2 and 3, as will be described.

Configurable ATS 100 includes a transfer switch assembly 102, a controller 104, a graphical user interface (GUI) device 106, an external communication module 108, an enclosure 110, an accessories collection 112, and one or more assigned circuits 114 that are assigned per accessory. Controller 104 can be coupled to transfer switch assembly 102, GUI device 106, external communication module 108, accessories collection 112, and assigned circuit(s) 114 via one or more internal communication channels 103, 105, 107, 109. Internal communication channels 103, 105, 107, 109 use wired or wireless communication paths, such as one or more system buses.

In one or more embodiments, as indicated graphically in FIG. 1, ATS 100 can optionally eliminate certain conventional components, such as customer terminal block 130, add-on panels 134, door controls 132, and communication paths 131, and/or optionally communicate with remote user IO 140 via communication path 115. However, in one or more embodiments, components such as customer terminal block 130, add-on panels 134, door controls 132, communication paths 131, remote user IO 140 and/or communication path 115 can be included with ATS 100. A conventional ATS 100 having and/or in communication with one or more of these conventional components can be retrofitted to include and operate with accessories collection 112, any assigned circuits 114 (when included) and the described functions. In addition, display device 106 can be retrofitted to operate with tech tool 118.

Transfer-switch assembly 102 functions, for example, as a switch between a primary power source 3 and one or more backup, standby power sources 5. Transfer switch 102 assembly includes hardware 116. Portions of hardware 116 can be external to transfer-switch assembly 102. Hardware 116 can include, for example, a mechanical-switching mechanism that can include one or more contacts and mechanisms to move the contacts, such as a solenoid or the equivalent, one or more mechanical interlocks to prevent direct connection of two power sources (e.g., primary power source 3 and backup power source 5). Transfer-switch assembly 102 includes a transfer switch, and can include additional switches, such as bypass switch and an isolation switch.

Controller 104 includes a computer system, such as computer system 300 shown in FIG. 3. Controller 104 is configured to send control signals to transfer switch assembly 102 and receives status information from transfer switch assembly 102 via communication path 103. The control signals are determined by controller 104 based on signals provided by one or more selected accessories of accessories collection 112, which in turn can interact with one or more selected assigned circuit(s) of the one or more assigned circuits 114. One or more functions of controller 104 can be carried out by firmware and/or hardware of controller 104, and can further be carried out by the one or more selected assigned circuits 114, if selected. Controller 104 receives configuration requests, which can be entered by a user or device using GUI device 106 and received via signal path 105. [Configuration requests can also be received from remote user com 120 via external com module 108 and received via signal path 107.

GUI device 106 can include, for example a human machine interface (HMI). Graphical user interface 106 (e.g., the HMI) can communicate with a proprietary tech tool 118. A technician can input the configuration requests to tech tool 118, e.g., via a user interface of tech tool 118. Tech tool 118 and or GUI device 106 can be secured devices such that access to tech tool 118 can be only by an authorized user. Tech tool 118 can be removably coupled to GUI device 106 for submitting configuration requests to GUI device 106. Access to GUI 106 can be secured and only allowed to authorized users or tech tools 118. Tech tool 118 and/or GUI device 106 can use an authentication process to assure that access is authorized. The coupling for communication between tech tool 118 and GUI device 106 can be signal path 113, which can use, for example and without limitation, a universal serial bus (USB) removable coupling or other wired or wireless methods for data communication that are currently known.

Controller 104 can exchange data with external communication (comm) module 108 via signal path 107. A remote user communication device 120 that is external to ATS 100 can communicate with controller 104 via external comm module 108 using a communication path 111, which includes any hardware and/or software necessary for communication with a remote device, such as a network interface. External comm module 108 can be a general purpose computer programmed to perform an input, output, and/or configuration task or a special purpose computer designed for the particular input, output, and/or configuration task. Communication path 111 can use a network communication protocol, such as Ethernet, but without limitation to a particular network communication protocol. Remote user communication device 120 and GUI device 106 can both be used to receive user input for configuring ATS 100 and/or to receive information about the configuration, such as a display of activated accessories.

Accessories collection 112 includes a storage device that stores a plurality of accessories. The storage device can be external to and accessible by controller 104, or can be integrated with a storage device that is integrated with controller 104, such as storage 334 shown in FIG. 3. The accessories are software modules that include software programs that when executed by controller 104 cause 104 to perform an IO function that have conventionally been performed by a dedicated input or output (IO) device. An accessory selected from accessories collection 112 can perform the same function as a dedicated physical IO device.

A conventional IO device could be a switch or relay contact that would be conventionally disposed on an external surface of an outer encasement of a conventional transfer switch system, such as on a control section of a door of the conventional transfer switch system. IO functions can be sensitive. Certain complex conventional IO devices may require additional circuitry. Addition of local circuitry could be performed using an add-on panel (such as optional, conventional add-on panel 134 that would be mounted inside enclosure 110). Addition of remote circuitry could be performed using a conventional customer terminal block (such as optional, conventional customer terminal block 130 that would also be mounted inside enclosure 110). A conventional IO device having a sensitive IO function would typically be protected with a physical lock, such as a key switch, that would need to be manually unlocked in order for the IO function to be performed. Each conventional IO device would be a discrete device that would typically be dedicated to a predetermined set of functionality. Each customer can order a customized conventional ATS, meaning the ATS would need to be physically configured with physical, conventional, IO device per the customized order. Each physical, conventional IO device would generate additional system cost for material and labor and introduces an additional site for potential physical failure. Customized conventional IO devices would need to be installed during the manufacturing process, which slows product delivery and extends lead times. Due to the physical uniqueness of conventional IO devices used for each individual, conventional ATS, challenges would arise maintaining stock of a variety of finished goods.

On the contrary, accessories can be selected from accessories collection 112 for customizing IO of ATS 100 per customer. When an accessory is selected, it is enabled, thus configuring functionality of controller 104. Each accessory can provide a different IO function. In addition, different accessories can operate the same physical component (which can be a hardware component of hardware 116 or one of the assigned circuits 114), with each of the different accessories causing the physical component to perform a different function.

Once an accessory is enabled, it can be activated by a user and becomes accessible to receive user input via GUI device 106. Additionally, the enabled accessory can output information (e.g., status, measurements, alerts, etc.) via GUI device 106. For example, a different interactive graphical element (IGE) can be enabled in the display of GUI device 106 that corresponds to each respective enabled accessory. The IGE can be user operable for activating and entering information into the corresponding accessory and for viewing information output by the corresponding accessory.

Once all of the accessories needed for a configuration are selected, the ATS is configured. Each accessory in accessories collection 112 that is not enabled remains inaccessible and transparent to the user, such that the user would not be aware of its existence. The inaccessibility of a non-enabled accessory can be maintained by a lock, such as a software lock. The lock can prevent the first software configurable accessory from being enabled and/or accessed. In one or more embodiments, the software lock can be unlocked, only with proper authorization, to allow enablement of the corresponding accessory at a future time, such as upon payment of a subscription fee for the corresponding accessory. An authentication process can be provided for determining if authorization is proper. In one or more embodiments, the lock can be permanent such that the corresponding accessory is permanently disabled. In one or more embodiments, the corresponding accessory is temporarily or permanently deleted once ATS 100 is configured.

An assigned circuit 114 is a circuit that is needed by an accessory for performing an IO function, e.g., a complex IO function. An assigned circuit 114 is provided for each accessory that needs additional circuitry to perform its IO function in order for the accessory to be functional. The accessory can control and/or receive feedback signals from its corresponding assigned circuit 114. Two or more accessories can use the same assigned circuit 114 for performing different IO functions, or alternatively an IO component (such as a physical switch or indicator and/or a digital switch or indicator (e.g., via GUI device 106). The assigned circuits 114 can be digital or analog and can interface with digital or analog IO devices. A non-limiting example of an assigned circuit 114 for a digital input is a toggle switch to initiate a system test. A non-limiting example of an analog input is a temperature sensor that outputs a 4 to 20 mA signal proportional to ambient temperature, wherein controller 104 is triggered to perform an action when the ambient temperature is outside of configured limits. A non-limiting example of a digital output is an indicator that is activated when an error is detected. A non-limiting example of an analog output is a 1 to 5V output proportional to an average measured voltage of ATS 100. The assigned circuits can include circuits that are fully or partially external or internal to enclosure 110.

An assigned circuit 114 that is not used by any of the accessories that were enabled is not used and is transparent to the user, such that the user of ATS 100 is unaware of the assigned circuit 114's presence. The assigned circuit 114 can be locked so that it cannot be accessed. The lock can be implemented, for example, using software (e.g., a password that can be entered via an HMI of GUI device 106 or a mechanical lock, such as a key switch.

ATS 100 can be provided with standard IO features and selectable IO features that are available by selection, possibly for a monetary fee. When a user (meaning a purchaser) orders ATS 100, the user can select the IO features. ATS 100 can be configured with its standard IO features and the selected IO features at a time of manufacture. In one or more embodiments, configuration of ATS 100 is locked and cannot be changed. The lock can be inherent due to the need for authentication to enable an accessory. [In one or more embodiments, an additional lock can be implemented to prevent further configuration after the manufacture process is complete. The lock can be permanent, or alternatively it can be overridden by an authorized user, e.g., pending authentication of the user, for reconfiguration of ATS 100. For example, the ATS 100 can be reconfigured at a field location at which it is installed. Reconfiguration can be performed before or after installation is performed.

Reconfiguration of ATS 100 can be performed via GUI device 106 and/or remote user communication 120. A local GUI for display by GUI device 106 can be recreated on a remote screen and user entered configuration information entered via the GUI on the remote screen can be communicated to controller 105 via remote user communication. Authentication can be required for user entered configuration information via the GUI of the remote screen or via the HMI. A user performing the reconfiguration can be required to be authorized to perform the reconfiguration, and an authentication process can be used to authenticate the user as being authorized. For example, the user can be required to enter a username and/or textual or biometric password, and/or perform two-factor authentication, and/or use an equivalent authentication process that is known or is not yet known. In one or more embodiments, the user can perform authentication at least partially via a GUI provided by GUI device 106 or remote user communication 120. Once the user is authenticated, the user can then enter a configuration request for reconfiguring ATS 100 via the GUI. In one or more embodiments, GUI device 106 is an HMI.

In one or more embodiments, the reconfiguration must be performed by sending a proprietary signal using a proprietary device, such as tech tool 118. The proprietary device can have one or more proprietary interfaces via which proprietary signals can be sent. The proprietary interface(s) can be implemented using physical and/or software interfaces. When any of the proprietary interface(s) (proprietary physical and/or software interfaces) are not used, any signals transmitted would not be proprietary signals. The physical proprietary interface can include mating proprietary interfaces on each of the proprietary device and GUI device 106. The mating of the physical proprietary interfaces allows signals, which are thus proprietary signals, to be passed from the proprietary device to GUI device 106. The software proprietary interfaces can use digital certificates, hashes, etc.

ATS 100 can optionally (as indicated by dotted lines in FIG. 1) include traditional ATS features for use with conventional discrete IO devices, including, for example a customer terminal block, door controls 132, and/or add-on panels 134, which can communicate with controller 104 via one or more communication paths 131. Communication paths 131 can optionally overlap with any of communication paths 103, 105, 107, and 109. Customer terminal block 130 can communicate with a conventional remote user IO 140 via a communication path 115, which includes any hardware and/or software necessary for communication with a remote device, such as a network interface. Communication path 111 can use a network communication protocol, such as Ethernet, but without limitation to a particular network communication protocol. Communication path 115 can use a network communication protocol, such as Ethernet, but without limitation to a particular network communication protocol. Communication path 113 can optionally overlap with communication path 111.

With reference now to FIGS. 2A-2C, shown are flowcharts demonstrating example implementation of the various exemplary embodiments. It is noted that the order of blocks shown in FIGS. 2A-2Cis not required, so in principle, the various blocks may be performed out of the illustrated order or in parallel. Also certain blocks may be skipped, different blocks may be added or substituted, or selected blocks or groups of blocks may be performed in a separate application following the embodiments described herein.

FIG. 2A illustrates a flowchart that shows an example method performed by an ATS controller, such as controller 104 shown in FIG. 1.

At block 202A an enablement request is identified, wherein the enablement request requests enablement of a first software configurable accessory (SCA) of a plurality of available software configurable accessories. The first software configurable accessory is configured, when activated, to interact, when activated, with a first hardware component of a plurality of hardware components of the ATS, such as hardware 116 shown in FIG. 1.

At decision block 204A, a determination is made whether or not to fulfill the enable request. Decision block 204A is explained in greater detail in FIG. 2C. If the determination at decision block 204A is affirmative, the method continues at block 206A. If the determination at decision block 204A is negative, the method ends.

At block 206A, the first software configurable accessory is enabled for interacting with the first hardware component responsive to identifying the enablement request. Only software configurable accessories that have been enabled are available to be activated. The first software configurable accessory is configured to interact, when activated, with a first hardware component of the plurality of hardware components.

Optional block 208A is an optional block, in which all software configurable accessories that are not enabled and/or assigned circuits that correspond to a software configurable accessory that is not enabled are locked. Each lock can be permanent or temporary. If temporary, unlocking the enabled software configurable accessories can only be performed using a proprietary signal. If permanent, the lock cannot be unlocked.

At block 210A, an IGE that corresponds to the first software configurable accessory is displayed at an interface of the ATS only when the first software configurable accessory is enabled. The interface can be a GUI provided by a GUI device, such as GUI device 106. The IGE is configured to facilitate interaction between a user and the first software configurable accessory for activating and/or providing input to the first software configurable accessory for interacting with the first hardware component.

Each of the software configurable accessories in the accessories collection can be configured to interact with a different hardware component. It is also possible that two different software configurable accessories in the accessories collection are configured to interact with the same hardware component, but to perform a different function.

Some software configurable accessories in the accessories collection are configured to interact with an assigned circuit that is integrated in the ATS. Different software configurable accessories can be configured to interact with different assigned circuits. It is also possible that two different software configurable accessories in the accessories collection are configured to interact with the same assigned circuit. It is also possible that two different software configurable accessories that are configured to interact with the same assigned circuit use different functions when interacting with the assigned circuit.

FIG. 2B illustrates a flowchart that shows an example method performed by an enabled software configurable accessory, such as an software configurable accessory selected from the accessories collection 112 shown in FIG. 1. At block 202B, upon activation of the software configurable accessory, the software configurable accessory interacts with a corresponding hardware component with which it was configured to interact.

At block 204B, upon activation of the enabled software configurable accessory, if the software configurable accessory was configured to interact with an assigned circuit upon activation, the software configurable accessory interacts with a corresponding assigned circuit with which it was configured to interact. This interaction with the assigned circuit can influence interactions with the corresponding hardware component.

FIG. 2C illustrates a flowchart that shows an example method of performing block 204A of FIG. 2A. At decision block 202C, a determination is made whether the first software configurable accessory is a standard software configurable accessory that can be enabled without further approval or is an optional accessory that needs approval before being enabled.

If the determination at decision block 202C is that the first software configurable accessory is standard, the method continues at block 212C. At block 212C the software configurable accessory is enabled and is stored in non-volatile memory. Accordingly, all configuration information that is enabled is stored in non-volatile memory. At block 214C, enablement of the first software configurable accessory is verified to ensure that an SCA and/or additional circuit is not enabled if it is not supported by ATS 100. An efficient way to perform this safeguard is by implementation of the safeguard in the GUI via which the enablement request was entered to only allow user entry of enablement requests that are supported by ATS 100. In this way, all enablement requests received at block 202A of FIG. 2A would be verified.

If the determination at decision block 202C is that the first software configurable accessory is an optional accessory, the method continues at block 204C. At decision block 204C, a determination is made whether the first software configurable accessory has been purchased by the customer requesting to enable it. If the determination at decision block 204C is negative, the first software configurable accessory is not enabled and the method ends. If the determination at decision block 204C is affirmative, the method continues at decision block 206C. At decision block 206C, a determination is made whether the first software configurable accessory requires additional circuitry for operation, e.g., once the first software configurable accessory is enabled and activated. If the determination at decision block 206C is negative, the method continues at block 212C. If the determination at decision block 206C is affirmative, the method continues at decision block 208C. At decision block 208C, a determination is made whether the required additional circuitry is installed in ATS 100. If the determination at decision block 208C is negative, the first software configurable accessory is not enabled and the method ends. If the determination at decision block 208C is affirmative, the method continues at decision block 212C.

FIG. 2D illustrates a flowchart that shows an example method performed by a proprietary tool for configuring an ATS, such as proprietary tool 112 and ATS 100 shown in FIG. 1. At block 202D, a user is authenticated to perform a configuration process.

At block 204D, a menu of software configurable accessories available for selection is displayed by the proprietary device, wherein each of the software configurable accessories is configured to interact with a corresponding hardware components of a plurality of hardware components associated with the ATS. The menu can be displayed in response to a configuration request submitted by a user to the proprietary tool to initiate a configuration process for configuring the ATS. At block 206D, a menu selection of a software configurable accessory is received, wherein the selected software configurable accessory is configured to interact with a first hardware component of the plurality of hardware components. The menu selection is only accepted by an authenticated user operating the proprietary device and an authenticated proprietary device.

At block 208D, a proprietary signal is transmitted by the proprietary device to the ATS with the menu selection. In one or more embodiments, the proprietary signal is only submitted a user operating the proprietary device and the proprietary device are authenticated. A controller of the ATS enables the selected software configurable accessory for interacting with the first hardware component responsive to receiving the proprietary signal. In addition, a GUI device of the ATS displays an IGE that corresponds to the first software configurable accessory only when the selected software configurable accessory is enabled, wherein the IGE is configured to interact with the first hardware component and a user for activating and/or providing input to the selected software configurable accessory.

Transmission of the proprietary signal for enabling the selected software configurable accessory can be performed at a time of manufacture of the ATS and/or at a field location after the ATS is installed at the field location.

Examples of Accessories are provided in Table 1 below:

**Table 1:**

| **INPUTS** | | |
|---|---|---|
| **IO Feature Title** | **Class** | **Feature Description** |
| SIMULATE S1 FAILURE (TEST) | STANDARD | SIMULATES S1 FAILURE AND CAUSES LOAD TO BE TRANSFERRED TO S2 |
| BYPASS TIME DELAY | STANDARD | BYPASSES TIME DELAY |
| LOAD SHED | OPTIONAL | ACTIVATES LOAD SHED |
| PREFERRED SOURCE | OPTIONAL, REQUIRES ADDITIONAL CIRCUITRY | SELECTS PREFERRED SOURCE |
| INHIBIT | OPTIONAL, REQUIRES ADDITIONAL CIRCUITRY | INHIBITS TRANSFER |
| ALARM RESET | STANDARD ON DUAL OPERATOR TS | RESETS ALARM |
| SOFT LOAD | STANDARD ON CTTS ONLY | ACTIVATES SOFT LOAD MODE |
| CLOSED TRANSITION BYPASS | STANDARD ON CTTS ONLY | BYPASSES CLOSED TRANSITION TRANSFER |

| **OUTPUTS** | | |
|---|---|---|
| **IO Feature Title** | **Class** | **Feature Description** |
| TS POSITION | STANDARD | SHOWS TS POSITION |
| SOURCE ACCEPTABILITY | STANDARD | SHOWS SOURCE STATUS |
| TRANSFER SIGNAL | STANDARD | SIGNALS PRE AND POST TRANSFER |
| FAILURE TO SYNC | STANDARD ON CTTS ONLY | SIGNALS FAILURE TO SYNC CONDITION |
| LOAD DISCONNECT | STANDARD ON DTTS ONLY | SIGNALS LOAD IS DISCONNECTED |
| EXTENDED PARALLEL | STANDARD ON CTTS ONLY | SIGNALS EXTENDED PARALLEL CONDITION |
| TS LOCKED OUT | STANDARD ON DUAL OPERATOR TS | SIGNALS TS LOCKED OUT CONDITION |

### Abbreviation Key:

TS = transfer switch
CTTS = Closed transition transfer switch
DTTS = Delayed transition transfer switch

With reference to FIG. 3, a block diagram of an example computer system 300 is shown, which provides an example configuration of a controller 104 embodied in one or more computer-implemented systems, such as ATS 100. In various embodiments, computer system 300 may include one or more of a field-programmable gate array (FPGA), application specific integrated circuit (ASIC), microcontroller, microprocessor, or the like. Computer system 300 is only one example of a suitable system and is not intended to suggest any limitation as to the scope of use or functionality of embodiments of the disclosure described herein. Computer system 300 can be implemented using hardware, software, and/or firmware. Regardless, computer system 300 is capable of being implemented and/or performing functionality as set forth in the disclosure.

Computer system 300 is shown in the form of a general-purpose computing device. Computer system 300 includes a processor 302, storage device 304, an input/output (I/O) interface (I/F) 306 that can communicate with an internal component, such as a user interface 310, and optionally an external component 308, such as remote user comm 120 shown in FIG. 1. User interface 310 can include, for example, GUI device 106, shown in FIG. 1, which can include, for example, an HMI.

The processor 302 can include, for example, a programmable logic device (PLD), microprocessor, DSP, a microcontroller, an FPGA, an ASIC, and/or other discrete or integrated logic circuitry having similar processing capabilities.

The processor 302 and the storage device 304 (all or a portion thereof) can both be included in components provided in the FPGA, ASIC, microcontroller, or microprocessor, for example. Storage device 304 can include, for example, volatile and non-volatile memory for storing data temporarily or long term, and for storing programmable instructions executable by processor 302. Storage device 304 can include a removable (e.g., portable) memory for storage of program instructions. I/O I/F 306 can include an interface and/or conductors to couple to the one or more internal components, such as a port for providing communication with external component 108.

The computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flow diagram and/or block diagram block or blocks.

The computer program instructions may also be loaded onto a computer, other programmable data processing apparatus, or other devices to cause a series of operational operations to be performed on the computer, other programmable apparatus or other devices to produce a computer implemented process such that the instructions which execute on the computer or other programmable apparatus provide processes for implementing the functions/acts specified with reference to the flowchart blocks or block diagram(s).

Embodiments of the processing components of ATS 100 may be implemented or executed by one or more computer systems 300, such as a microprocessor. Each computer system 300 can be included within controller 104, or multiple instances thereof. Computer system 300 can be provided as a device embedded in ATS 100. Portions of computer system 300 can be provided externally, such by way of a virtual, centralized, and/or cloud-based computer.

Computer system 300 is only one example of a suitable system and is not intended to suggest any limitation as to the scope of use or functionality of embodiments of the disclosure described herein. Regardless, computer system 300 is capable of being implemented and/or performing any of the functionality set forth hereinabove.

Computer system 300 may be described in the general context of computer system-executable instructions, such as program modules, being executed by a computer system. Generally, program modules may include routines, programs, objects, components, logic, data structures, and so on that perform particular tasks or implement particular abstract data types.

In the preceding, reference is made to various embodiments. However, the scope of the present disclosure is not limited to the specific described embodiments. Instead, any combination of the described features and elements, whether related to different embodiments or not, is contemplated to implement and practice contemplated embodiments. Furthermore, although embodiments may achieve advantages over other possible solutions or over the prior art, whether or not a particular advantage is achieved by a given embodiment is not limiting of the scope of the present disclosure. Thus, the preceding aspects, features, embodiments and advantages are merely illustrative and are not considered elements or limitations of the appended claims except where explicitly recited in a claim(s).

The various embodiments disclosed herein may be implemented as a system, method or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in one or more computer-readable medium(s) having computer-readable program code embodied thereon.

Any combination of one or more computer-readable medium(s) may be utilized. The computer-readable medium may be a non-transitory computer-readable medium. A non-transitory computer-readable medium may be, for example, but not limited to, an electronic, magnetic, optical, electromagnetic, infrared, or semiconductor system, apparatus, or device, or any suitable combination of the foregoing. More specific examples (a non-exhaustive list) of the non-transitory computer-readable medium can include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Program code embodied on a computer-readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages. Moreover, such computer program code can execute using a single computer system or by multiple computer systems communicating with one another (e.g., using a local area network (LAN), wide area network (WAN), the Internet, etc.). While various features in the preceding are described with reference to flowchart illustrations and/or block diagrams, a person of ordinary skill in the art will understand that each block of the flowchart illustrations and/or block diagrams, as well as combinations of blocks in the flowchart illustrations and/or block diagrams, can be implemented by computer logic (e.g., computer program instructions, hardware logic, a combination of the two, etc.). Generally, computer program instructions may be provided to a processor(s) of a general-purpose computer, special-purpose computer, or other programmable data processing apparatus. Moreover, the execution of such computer program instructions using the processor(s) produces a machine that can carry out a function(s) or act(s) specified in the flowchart and/or block diagram block or blocks.

The flowchart and block diagrams in the Figures illustrate the architecture, functionality and/or operation of possible implementations of various embodiments of the present disclosure. In this regard, each block in the flowchart or block diagrams may represent a module, segment or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Further examples are provided in the following clauses:
Clause 1. A method for controlling enablement of a software configurable accessory of a plurality of available software configurable accessories that are usable with an automatic transfer switch (ATS), the method comprising:
   identifying an enablement request to control enablement of a first software configurable accessory of available software configurable accessories that are each configured to interact, when activated, with at least one corresponding hardware components of a plurality of hardware components associated with the ATS, wherein the first software configurable accessory is configured to interact, when activated, with a first hardware component of the plurality of hardware components;
   enabling the first software configurable accessory responsive to identifying the enablement request, wherein software configurable accessories of the available software configurable accessories that have been enabled are available to be activated; and
   displaying an interactive graphical element (IGE) that corresponds to the first software configurable accessory at an interface of the ATS when the first software configurable accessory is enabled, wherein the IGE is configured to facilitate interaction between a user and the first software configurable accessory for activating and/or providing input to the first software configurable accessory for interacting with the first hardware component.
Clause 2. The method of clause 2, further comprising:
   identifying a second enablement request to control enablement of a second software configurable accessory of the available software configurable accessories, wherein the second software configurable accessory is configured to interact, when activated, with the first hardware component or a second hardware component of the plurality of hardware components, wherein at least one of the first and second software configurable accessories, when enabled, are configured to interact with a respective, corresponding assigned circuit selection of one or more assigned circuits that are integrated in the ATS; and
   enabling the second software configurable accessory responsive to identifying the second enablement request,
   wherein upon activation of either of the first and second software configurable accessories, the activated first or second software configurable accessory interacts with its corresponding assigned circuit that was selected, if any,
   wherein the interaction between the activated first or second software configurable accessory and its corresponding assigned circuit influences interaction between the activated first or second software and the corresponding first or second hardware component, and
   wherein at least one of the first and second software configurable accessories correspond to different assigned circuit selections or one of the first and second software configurable accessories corresponds to an assigned circuit selections.
Clause 3. The method of clause 1, further comprising:
   identifying a second enablement request to control enablement of a second software configurable accessory of the available software configurable accessories, wherein the second software configurable accessory is configured to interact, when activated, with the first hardware component or a second hardware component of the plurality of hardware components;
   enabling the second software configurable accessory responsive to identifying the second enablement request,
   wherein upon activation of either of the first and second software configurable accessories, the activated first or second software configurable accessory interacts with its corresponding hardware component of the first and second hardware components, and
   wherein when the first and second software configurable accessories are configured to both operate with the first hardware component, the correspond to the first and second software configurable accessories, when enabled, are configured to perform a different function when interacting with the first hardware component.
Clause 4. The method of clause 1, wherein when the first software configurable accessory is enabled, displaying the IGE includes receiving an activation request to activate the first software configurable accessory, and the method further comprises activating the first software configurable accessory responsive to receiving the activation request, wherein when interacting with the first hardware component, the first software configurable accessory is configured to at least one of provide an input signal to the first hardware and receive output signals from the first hardware component, and displaying the IGE includes displaying output data based on the output signals.
Clause 5. The method of clause 1, wherein enabling the first software configurable accessory is performed at a time of manufacture.
Clause 6. The method of clause 1, wherein enabling the first software configurable accessory is performed at a field location after installation of the ATS at the field location.
Clause 7. The method of clause 1, wherein enabling the first software configurable accessory includes authenticating a source of the request.
Clause 8. The method of clause 1, wherein at least one of receiving the enablement request and displaying the IGE uses a digital user interface, and the digital user interface is at least one of a remote digital user interface that is remote form the ATS, an integrated digital user interface that is integrated with the ATS, and a human machine interface (HMI) integrated with the ATS.
Clause 9. The method of clause 1, wherein identifying the enablement request includes receiving a proprietary signal.
Clause 10. The method of clause 1, further comprising operating a fixed input or output device using at least one of a door control, a customer terminal block, and an add-on panel to access the fixed hardware component incorporated with the ATS.
Clause 11. The method of clause 1, further comprising after identifying the request, verifying that the first software configurable accessory is standard or has been purchased and requires circuitry that is already installed in the ATS, wherein the enabling the at least one software configurable accessory is contingent upon the verifying.
Clause 12. The method of clause 1, wherein before enabling the first software configurable accessory, the method further includes unlocking a lock, wherein when the lock is locked, the lock prevents the first software configurable accessory from being enabled and/or accessed.
Clause 13. A controller of an automatic transfer switch (ATS) comprising:
   a memory configured to store instructions; and
   a processor disposed in communication with the memory, wherein the processor, upon execution of the instructions is configured to:
      identify an enablement request to control enablement of a first software configurable accessory of available software configurable accessories that are each configured to interact, when activated, with at least one corresponding hardware components of a plurality of hardware components associated with the ATS, wherein the first software configurable accessory is configured to interact, when activated, with a first hardware component of the plurality of hardware components;
      enable the first software configurable accessory responsive to identifying the enablement request, wherein software configurable accessories of the available software configure accessories that have been enabled are available to be activated; and
   display an interactive graphical element (IGE) that corresponds to the first software configurable accessory at an interface of the ATS when the first software configurable accessory is enabled, wherein the IGE is configured to facilitate interaction between a user and the first software configurable accessory for activating and/or providing input to the first software configurable accessory for interacting with the first hardware component.
Clause 14. The controller of clause 13, wherein the processor upon execution of the instructions is further configured to:
   identify a second enablement request to control enablement of a second software configurable accessory of the available software configurable accessories, wherein the second software configurable accessory is configured to interact, when activated, with the first hardware component or a second hardware component of the plurality of hardware components, wherein at least one of the first and second software configurable accessories, when enabled, are configured to interact with a respective, corresponding assigned circuit selection of one or more assigned circuits that are integrated in the ATS; and
   enable the second software configurable accessory responsive to identifying the second enablement request,
   wherein upon activation of either of the first and second software configurable accessories, the activated first or second software configurable accessory interacts with its corresponding assigned circuit that was selected, if any, wherein the interaction between the activated first or second software configurable accessory and its corresponding assigned circuit influences interaction between the activated first or second software and the corresponding first or second hardware component.
Clause 15. A method of configuring an automatic transfer switch (ATS), the method comprising:
   displaying a menu of software configurable accessories available for selection, wherein each of the software configurable accessories is configured to interact with a corresponding hardware components of a plurality of hardware components associated with the ATS;
   receiving a menu selection of a software configurable accessory, wherein the selected software configurable accessory interacts with a first hardware component of the plurality of hardware components; and
   transmitting a proprietary signal to the ATS with the menu selection, wherein a controller of the ATS enables the selected software configurable accessory for interacting with the first hardware component responsive to receiving the proprietary signal and a graphical user interface (GUI) device of the ATS displays an interactive graphical element (IGE) that corresponds to the selected software configurable accessory when the selected software configurable accessory is enabled, wherein the IGE is configured to interact with the first hardware component and a user for activating and/or providing input to the selected software configurable accessory.
Clause 16. The method of clause 15, wherein,
   the selected software configurable accessory, when enabled, is configured to interact with an assigned circuit selected from one or more assigned circuits that are integrated in the ATS; and
   upon activation of the selected software configurable accessories, the activated selected software configurable accessory interacts with its corresponding assigned circuit that was selected, wherein the interaction between the activated selected software configurable accessory and its corresponding assigned circuit influences interaction between the activated first or second software and the corresponding first or second hardware component.
Clause 17. The method of clause 15, wherein transmission of the proprietary signal for enabling the selected software configurable accessory is performed at a time of manufacture.
Clause 18. The method of clause 15, wherein transmission of the proprietary signal for enabling the selected software configurable accessory is performed at a field location after installation of the ATS at the field location.
Clause 19. The method of clause 15, further comprising authenticating a user operating a proprietary device and the proprietary device via which the menu is displayed before accepting the menu selection or transmitting the proprietary signal.
Clause 20. A proprietary tool for configuring an automatic transfer switch (ATS), the proprietary tool comprising:
   a memory configured to store instructions;
   a processor disposed in communication with the memory, wherein the processor, upon execution of the instructions is configured to:
      display a menu of software configurable accessories available for selection, wherein each of the software configurable accessories is configured to interact with a corresponding hardware components of a plurality of hardware components associated with the ATS;
      receive a menu selection of a software configurable accessory, wherein the selected software configurable accessory interacts with a first hardware component of the plurality of hardware components; and
      transmit a proprietary signal to the ATS with the menu selection, wherein a controller of the ATS enables the selected software configurable accessory for interacting with the first hardware component responsive to receiving the proprietary signal and a graphical user interface (GUI) device of the ATS displays an interactive graphical element (IGE) that corresponds to the selected software configurable accessory when the selected software configurable accessory is enabled, wherein the IGE is configured to interact with the first hardware component and a user for activating and/or providing input to the selected software configurable accessory.

It is to be understood that the above description is intended to be illustrative, and not restrictive. Many other implementation examples are apparent upon reading and understanding the above description. Although the disclosure describes specific examples, it is recognized that the systems and methods of the disclosure are not limited to the examples described herein, but may be practiced with modifications within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer implemented method for controlling enablement of a software configurable accessory of a plurality of available software configurable accessories that are usable with an automatic transfer switch (ATS), the method comprising:
identifying an enablement request to control enablement of a first software configurable accessory of available software configurable accessories that are each configured to interact, when activated, with at least one corresponding hardware components of a plurality of hardware components associated with the ATS, wherein the first software configurable accessory is configured to interact, when activated, with a first hardware component of the plurality of hardware components;
enabling the first software configurable accessory responsive to identifying the enablement request, wherein software configurable accessories of the available software configurable accessories that have been enabled are available to be activated; and
displaying an interactive graphical element (IGE) that corresponds to the first software configurable accessory at an interface of the ATS when the first software configurable accessory is enabled, wherein the IGE is configured to facilitate interaction between a user and the first software configurable accessory for activating and/or providing input to the first software configurable accessory for interacting with the first hardware component.

2. The method of claim 2, further comprising:
identifying a second enablement request to control enablement of a second software configurable accessory of the available software configurable accessories, wherein the second software configurable accessory is configured to interact, when activated, with the first hardware component or a second hardware component of the plurality of hardware components, wherein at least one of the first and second software configurable accessories, when enabled, are configured to interact with a respective, corresponding assigned circuit selection of one or more assigned circuits that are integrated in the ATS; and
enabling the second software configurable accessory responsive to identifying the second enablement request,
wherein upon activation of either of the first and second software configurable accessories, the activated first or second software configurable accessory interacts with its corresponding assigned circuit that was selected, if any,
wherein the interaction between the activated first or second software configurable accessory and its corresponding assigned circuit influences interaction between the activated first or second software and the corresponding first or second hardware component, and
wherein at least one of the first and second software configurable accessories preferably correspond to different assigned circuit selections or one of the first and second software configurable accessories corresponds to an assigned circuit selections.

3. The method of claim 1, further comprising:
identifying a second enablement request to control enablement of a second software configurable accessory of the available software configurable accessories, wherein the second software configurable accessory is configured to interact, when activated, with the first hardware component or a second hardware component of the plurality of hardware components;
enabling the second software configurable accessory responsive to identifying the second enablement request,
wherein upon activation of either of the first and second software configurable accessories, the activated first or second software configurable accessory interacts with its corresponding hardware component of the first and second hardware components, and
wherein when the first and second software configurable accessories are configured to both operate with the first hardware component, wherein the first and second software configurable accessories, when enabled, are configured to perform a different function when interacting with the first hardware component.

4. The method of any of the above claims, wherein when the first software configurable accessory is enabled, displaying the IGE includes receiving an activation request to activate the first software configurable accessory, and the method further comprises activating the first software configurable accessory responsive to receiving the activation request, wherein when interacting with the first hardware component, the first software configurable accessory is configured to at least one of provide an input signal to the first hardware and receive output signals from the first hardware component, and displaying the IGE includes displaying output data based on the output signals.

5. The method of any of the above claims, wherein enabling the first software configurable accessory is performed at one or more of a time of manufacture and a field location after installation of the ATS at the field location.

6. The method of any of the above claims, wherein the method further comprises one or more of:
authenticating a source of the request for enabling the first software configurable accessory; and
receiving a proprietary signal for identifying the enablement request.

7. The method of any of the above claims, wherein at least one of receiving the enablement request and displaying the IGE uses a digital user interface, and the digital user interface is at least one of a remote digital user interface that is remote form the ATS, an integrated digital user interface that is integrated with the ATS, and a human machine interface (HMI) integrated with the ATS.

8. The method of any of the above claims, further comprising operating a fixed input or output device using at least one of a door control, a customer terminal block, and an add-on panel to access the fixed hardware component incorporated with the ATS.

9. The method of any of the above claims, further comprising after identifying the request, verifying that the first software configurable accessory is standard or has been purchased and requires circuitry that is already installed in the ATS, wherein the enabling the at least one software configurable accessory is contingent upon the verifying.

10. The method of any of the above claims, wherein before enabling the first software configurable accessory, the method further includes unlocking a lock, wherein when the lock is locked, the lock prevents the first software configurable accessory from being enabled and/or accessed.

11. A controller of an automatic transfer switch (ATS) comprising:
a memory configured to store instructions; and
a processor disposed in communication with the memory, wherein the processor, upon execution of the instructions is configured to operate according to any of the above method claims.

12. A computer implemented method of configuring an automatic transfer switch (ATS), the method comprising:
displaying a menu of software configurable accessories available for selection, wherein each of the software configurable accessories is configured to interact with a corresponding hardware components of a plurality of hardware components associated with the ATS;
receiving a menu selection of a software configurable accessory, wherein the selected software configurable accessory interacts with a first hardware component of the plurality of hardware components; and
transmitting a proprietary signal to the ATS with the menu selection, wherein a controller of the ATS enables the selected software configurable accessory for interacting with the first hardware component responsive to receiving the proprietary signal and a graphical user interface (GUI) device of the ATS displays an interactive graphical element (IGE) that corresponds to the selected software configurable accessory when the selected software configurable accessory is enabled, wherein the IGE is configured to interact with the first hardware component and a user for activating and/or providing input to the selected software configurable accessory.

13. The method of claim 12, wherein,
the selected software configurable accessory, when enabled, is configured to interact with an assigned circuit selected from one or more assigned circuits that are integrated in the ATS; and
upon activation of the selected software configurable accessories, the activated selected software configurable accessory interacts with its corresponding assigned circuit that was selected, wherein the interaction between the activated selected software configurable accessory and its corresponding assigned circuit influences interaction between the activated first or second software and the corresponding first or second hardware component.

14. The method of any of claims 12 or 13, further comprising authenticating a user operating a proprietary device and the proprietary device via which the menu is displayed before accepting the menu selection or transmitting the proprietary signal.

15. A proprietary tool for configuring an automatic transfer switch (ATS), the proprietary tool comprising:
a memory configured to store instructions;
a processor disposed in communication with the memory, wherein the processor, upon execution of the instructions is configured to:
display a menu of software configurable accessories available for selection, wherein each of the software configurable accessories is configured to interact with a corresponding hardware components of a plurality of hardware components associated with the ATS;
receive a menu selection of a software configurable accessory, wherein the selected software configurable accessory interacts with a first hardware component of the plurality of hardware components; and
transmit a proprietary signal to the ATS with the menu selection, wherein a controller of the ATS enables the selected software configurable accessory for interacting with the first hardware component responsive to receiving the proprietary signal and a graphical user interface (GUI) device of the ATS displays an interactive graphical element (IGE) that corresponds to the selected software configurable accessory when the selected software configurable accessory is enabled, wherein the IGE is configured to interact with the first hardware component and a user for activating and/or providing input to the selected software configurable accessory.
